(19) Europäisches Patentamt
European Patent Office
Office européen des brevets

(11) Veröffentlichungsnummer : **0 078 022 B2**

(12) # NEUE EUROPÄISCHE PATENTSCHRIFT

(45) Veröffentlichungstag der neuen Patentschrift : **04.03.92 Patentblatt 92/10**

(51) Int. Cl.$^5$ : **D06B 3/28,** D06B 19/00

(21) Anmeldenummer : **82109717.7**

(22) Anmeldetag : **21.10.82**

(54) **Verfahren zum Behandeln von Textilgut in Jet-Färbeanlagen.**

(30) Priorität : **24.10.81 DE 3142200**

(43) Veröffentlichungstag der Anmeldung : **04.05.83 Patentblatt 83/18**

(45) Bekanntmachung des Hinweises auf die Patenterteilung : **05.02.86 Patentblatt 86/06**

(45) Bekanntmachung des Hinweises auf die Entscheidung über den Einspruch : **04.03.92 Patentblatt 92/10**

(84) Benannte Vertragsstaaten : **CH DE FR GB IT LI SE**

(56) Entgegenhaltungen :
**EP-A- 0 014 919**
**DE-A- 2 262 309**
**DE-A- 2 624 176**

(56) Entgegenhaltungen :
**DE-A- 2 823 534**
**DE-A- 2 908 888**
**FR-A- 2 370 816**
**FR-A- 2 390 533**
**FR-A- 2 450 895**
**US-A- 3 921 420**
**US-A- 3 949 575**

(73) Patentinhaber : **HOECHST AKTIENGESELLSCHAFT**
**Postfach 80 03 20**
**W-6230 Frankfurt am Main 80 (DE)**

(72) Erfinder : **Christ, Wilhelm**
**Breitwiesen 4**
**W-7178 Michelbach/Bilz (DE)**
Erfinder : **von der Eltz, Hans-Ulrich, Dr.**
**Willibrachtstrasse 14**
**W-6000 Frankfurt am Main 50 (DE)**
Erfinder : **Reuther, Albert**
**Falkenstrasse 74**
**W-6232 Bad Soden am Taunus (DE)**

EP 0 078 022 B2

## Beschreibung

Die vorliegenden Erfindung betrifft die diskontinuierliche oder kontinuierliche Naßbehandlung von strangförmigen Textilgut gemäß dem Oberbegriff des Ansprüches 1.

Bei den in der Praxis erprobten Verfahren zur Naßbehandlung von auf Düsenstuckfärbeanlagen in endloser Form umlaufenden Warensträngen ist entsprechend den bisher üblichen Gepflogenheiten der Transport des Textilgutes an das Vorhandensein von Behandlungsflüssigkeit (Flotte) innerhalb des Warenspeichers, dem Zirkulationssystem und der Düse gebunden, da die Warenbewegung durch die Flottenströmung zur Düse bewirkt wird, wobei das Behandlungsbad bereits die für den Veredlungsprozeß notwendigen Produkte enthält. Dieser hydraulische Warentransport ergibt zwangsläufig ein Flottenverhältnis von 1:6 bis 1:8. Ferner kann bei diesen herkömmlichen Verfahren das Aufheizen der Ware naturgemäß nur über die Flotte selbst erfolgen.

Aus den US-Patentschriften 3 921 420 und 3 949 575 sind darüber hinaus neuere Verfahren auf dem gleichen Arbeitsgebiet bekannt geworden, bei denen der Warenvorschub für den Warenumlauf mittels der Antriebsenergie eines strömenden inerten Gases erfolgt. Die besondere Eigenart des inerten Gases ist in diesen Fällen dadurch gekennzeichnet, daß es die anwendungstechnischen Eigenschaften von Behandlungsflotte und Behandlungsgut nicht verändert, d.h. es kommen für die vorgesehene Aufgabe nur kalte Gase infrage, da jede höhere Temperatur das Gas im Sinne obiger Definition nicht mehr inert sein läßt. Als Folge davon gliedern sich die Verfahren dieser beiden US-PSen im Prinzip in eine Applikationsphase, in der die Behandlungsflotte in inaktivem Zustand (d.h. in der Regel kalt) auf das Behandlungsgut aufgebracht wird, und in eine Fixierphase, in der durch Einleiten von Dampf oder Wärmeenergie in anderer Form in den Warenspeicher der Jet-Anlage die Temperaturbedingungen auf der Ware und in der Flotte geändert werden. Es ist an dieser Stelle ausdrücklich zu bemerken, daß diese Änderung nicht über den Inertgasstrom erfolgt. Das Antriebsgas selbst wird - sofern überhaupt- indirekt durch die Flottenerwärmung mit erwärmt, nicht aber gezielt absichtlich aktiv zur Systemerwärmung verwendet.

Das Verfahren der US-PS 3 949 575 unterscheidet sich nur unwesentlich von den bisher üblichen Jet-Verfahren, indem die Behandlungsflotte im Warenspeicher vorgelegt wird, von der Ware aufgenommen und mit ihr (in ihr) den Umlauf mitmacht. Überschüssige Flotte wird laufend in den Inertgasstrom eingebracht, und durch dieses Recycling werden Flottenverluste vermieden.

Die Arbeitstechnik nach der US-PS 3 921 420 geht in dieser Hinsicht einen Schritt weiter und bringt die gesamte Behandlungsflotte durch Zudosieren zum antriebenden, kalten Inertgasstrom auf das Behandlungsgut.

Gemäß diesen beiden US-PSen wird eine gut Verteilung der Behandlungsflotte, auch in einem nichtmigrierenden System (d.h. wo die gesamte Behandlungsflotte im Behandlungsgut enthalten ist, also ohne überschüssige, aus der Ware ablaufende Flotte) während der Applikationsphase erreicht, wobei man in einer Schaumphase arbeitet. Diese gleichmäßige Verteilung wird als Voraussetzung vor der Fixierphase verlangt, weil man davon ausgeht, daß ungleichmäßig verteile Behandlungsmittel in der Fixierphase auch ungleichmäßig fixiert werden.

Aus der veröffentlichen europäischer Patentanmeldung 0 014 919 ist ferner ein isothermes Behandlungsverfahren bekannt, bei dem heißes vorgewärmtes Behandlungsgut mit heißer Behandlungsflotte in einer Jet-Anlage in Kontakt gebracht wird, wobei ein Teil der Behandlungsflotte dem Warenspeicherraum, der andere Teil der Jetdüse zugeführt wird und man den Warenantrieb wahlweise durch ein Gas oder durch Flüssigkeit (d.h. die Flotte) oder durch beide gemeinsam bewirkt. Die Behandlungsflotte wird dabei in üblicher Weise und unter den üblichen Konzentrationsbedingungen der Behandlungsmittel (Farbstoffe, Chemikalien) angesetzt.

Alle zuvor geschilderten bekannten Verfahren stellen jedoch noch nicht das erstrebenswerte Optimum dar. Den Verfahren der US-PSen haftet ein Nachteil dadurch an, daß infolge Zweistufigkeit längere Behandlungszeiten erforderlich sind als bei normalen Arbeitsweisen unter ausschließlichem Flottenantrieb. Außerdem machen der reine Inertgasstromantrieb sowie die Zirkulation der Überschußflotte besondere maschinelle Maßnahmen notwendig, die die Gesamtkonzeption derartiger Jetanlagen komplizieren.

Das Verfahren der europäischen Anmeldung kommt wiederum bezüglich der Flottenverhältniss zwangsläufig in den Bereich von 1:6 - 1:8 und bedarf daher großer, Wärmeenergiemengen, um diese Flottenmengen auf die erforderlichen Temperaturen aufzuheizen.

Aus der DE-A 22 62 309 ist ferner ein Verfahren zur Naßbehandlung, insbesondere zum Färben von Textilien bekannt, bei dem man die Behandlungsflotte in feiner Verteilung mittels eines Gasstroms auf das Textilgut aufsprüht. In dieser DE-OS ist an keiner Stelle offenbart oder etwa angedeutet, daß ein Warenvorschub mittels eines umgewälzten Gasstroms erfolgen könne. Das zum Versprühen der Behandlungsflotte dienende Gas kann demnach auch nicht zugleich einen Warenantrieb bewirken. Es handelt sich bei dieser Arbeitsweise also um eine grundsätzlich andere Methode als das Düsen(Jet)-Färbeverfahren. Dies ergibt sich auch aus den verschiedenen Figuren, von denen die Figuren 1 und 2 Vorrichtungen zum diskontinuierlichen Färben beschreiben, bei dem die Textilien u. a. in Form von "Strängen" eingebracht werden können, indem sie auf entsprechende Träger verpackt werden. Aus der Angabe, daß die Stränge auf entsprechende Träger verpackt werden, ergibt sich für den Fachmann eindeutig, daß es sich nicht um in endloser Form in einer Düsenstückfärbeanlage umlaufende Warenstränge handelt, sondern um Garnstränge, die in ruhender Stellung gefärbt werden. Bei dem Düsen(Jet)-Färbeverfahren laufen flächige Gebilde, die zu Warensträngen (Web- oder Maschenwaren) zusammengerafft sind, endlos um, während bei der Arbeitsweise gemäß DE-A-22 62 309 Garne behandelt werden, die zu einem Strang zusammengefaßt sind. Die Vorrichtungen nach den Figuren 3 bis 5 der DE-A-2 262 309 unterscheiden sich von denen nach den Figuren 1 bis 2 ausdrücklich dadurch, daß die Aufnahmebehälter so ausgebildet sind, daß flächiges Textilgut, Vlies, Flocke oder Non-Woven kontinuierlich durch einen Aufnahmebehälter gefördet werden kann, der dafür an seinen Enden mit drückdichten Ein- und Auslaßöffnungen versehen ist. Ein gleichmäßiger Farbauftrag ist mit einer Düse auf ein flächiges Textilgut in der Praxis bisher nicht erzielbar.

Allen Verfahren, laut zuvor besprochenem Stand der Technik, gemeinsam ist, daß sie nur in diskontinuierlicher Weise, d.h. mit in Einzelpartien aufgeteiltem strangförmigen Behandlungsgut durchführbar sind.

Der vorliegenden Erfindung liegt nunmehr die Aufgabe zugrunde, eine neuartige Kurzflottentechnik für Düsen(Jet)-Farbeanlagen zu entwickeln, die im Vergleich zu der in der Praxis eingeführten Arbeitsweise auf die Anwendung von noch kürzeren Flottenverhältnissen ausgerichtet ist, um der Notwendigkeit der Einsparung von Zeit, Energie und Wasser Rechnung zu tragen, und wobei auch eine kontinuierliche Arbeitsweise in Betracht gezogen sein soll. Das angestrebte Flottenverhältnis soll unter Weglassen einer Schaumphase 1:3 oder kleiner als 1:3 sein. Es sollen außerdem alle Temperaturbereiche umfaßt werden können, die isotherme Verfahrensweise soll wohl im Vordergrund stehen - jedoch soll auch die Möglichkeit für verfahrensgemäße Wechsel bezüglich der Behandlungstemperatur gegeben sein.

Diese Aufgabe wird erfindungsgemäß durch die Merkmale des kennzeichnenden Teils des Anspruchs 1 gelöst.

Im Zuge der Durchführung der neuen Arbeitsweise ergibt sich vorteilhaft auch die Möglichkeit, einen endlosen Warenstrang umlaufend in diskontinuierlicher Weise oder einen langlaufenden, nicht in sich geschlossenen Warenstrang während des Durchlaufens in kontinuierlicher Weise, eventuell in mehreren hintereinander angeordneten Maschineneinheiten, zu behandeln.

Unter einem Gasstrom im Sinne der vorliegenden Erfindung, welcher aufgrund von Temperaturerhöhung in einen verfahrenstechnisch in Bezug auf die beabsichtigte spezifische Behandlungswirkung nicht inerten Zustand übergeht, wird in der Regel ein Dampf- oder Heißluftstrom verstanden. Es kommen nach dem beanspruchten Verfahren aber auch Gemische von Dampf und Luft oder anderen Gasen bzw. Dämpfen infrage. Der hierbei umfaßte Temperaturbereich liegt, abhängig von der Natur des Textilgutes sowie vom durchzuführenden Behandlungsverfahren, zwischen 30°C und 140°C und wird durch die besondere Wahl in Bezug auf die Beschaffenheit des Gasstromes evtl. durch Mischen warmer und kälterer Komponenten eingestellt. Dadurch ist es möglich, sofern es das Verfahren erfordert, nach der Kontaktphase zwischen Behandlungsmittel und Behandlungsgut die Temperatur stufenlos oder in abgestufter Weise zu erhöhen oder herabzusetzen.

Der Warenvorschub kann verfahrensgemäß außerdem mechanisch eine angetriebene Umlenkwalze unterstützt werden.

Das Behandlungsmittel kann dem antrieben den Gasstrom mittels Düsen oder einer sonstigen Zerstäubervorrichtung zugesetzt werden.

Vorteilhaft erstreckt sich bei der diskontinuierlichen Arbeitsweise die Zeit des Zusetzens über mehrere Umläufe. Bei kontinuierlichen Verfahren wird die Zudosierung derartig gestaltet, daß sich am Auslauf der (gegebenenfalls jeweiligen) Anlage die gewünschte Auftragsmenge auf dem Behandlungsgut befindet.

Vorteilhaft wird das Behandlungsmittel in Form einer flüssigen Zubereitung z.B. als wäßrige Dispersion oder wäßrige Lösung verwendet. Die Temperatur dieser Zubereitungen richtet sich nach den Erfordernissen des Verfahrens, Behandlungsmittels und Behandlungsgutes (Bereich 30°C - 140°C).

Als Behandlungsmittel sind alle Stoffe anzusehen, die dem Behandlungsgut bestimmte beabsichtigte Eigenschaften verleihen. Vor allem sind zu nennen Farbstoffe, Chemikalien, Hilfsmittel, wie z.B. Waschmittel, Appreturnmittel, Veredlungsmittel, jedoch kan auch der nicht inerte Gasstrom selbst bereits als solches Behandlungsmittel betrachtet werden, da sich durch ihn z.B. ein Schrumpfvorgang auslösen läßt.

Es ist möglich, auch mehrere verschiedene Behandlungsmittel nacheinander oder miteinander gemischt aufzubringen.

Ein Ausführungsbeispiel für eine erfindungsgemäß verwendete Düsen(Jet)-Färbeanlage ist in der weiter unten angegebenen Zeichnung im Querschnitt schematisch dargestellt. Die hierin verwendeten Bezugszeichen haben folgende Bedeutung:

A = Jet-Färbemaschine mit Antriebsteil und Warenspeicherraum (nicht mit Ziffern versehen)
1 = Injektionsdüse

2 = Gebläse
3 = Ansatzgefäß für Behandlungsflüssigkeiten
4 = Pumpe in Injektionsleitung (7)
5 = Gasstromleitung
6 = Flottenleitung mit Pumpe (13)
7 = Injektionsleitung mit Pumpe (4)
8 = Drosselklappen
9 = Düsenantriebsvorrichtung (Jet-Düse, z.B. nach Venturiprinzip)
10 = Wärmeaustauscher in Injektionsleitung (7)
11 = Wärmeaustauscher in Flottenleitung (6)
12 = Behandlungsgut / Warenstrang
13 = Pumpe in Flottenleitung (6)
14 = Rückführleitung für Überschußflotte
15 = Zuführung für Dampf bzw. Luft
16 = Ventile a) und b)

In dieser Figur entspricht der mit Buchstabe A bezichnete Teil der Jet-Färbemaschine in weiten Teilen dem Prototyp einer sochen Vorrichtung, wie dieser in der US-PS 3 949 575 im Detail beschrieben wird.

Diese schematische Darstellung einer Düsenstückfärbeanlage soll das erfindungsgemäße Verfahren erläutern, ohne es jedoch in irgendeiner Weise einzuschränken.

Im Rahmen der Durchführung des erfindungsgemäßen Verfahrens strömt die Farbstoff- bzw. Produktansatzflotte, welche man in Behälter 3 (Flottenansatzgefäß bereitet sowie einstellt, aus der Injektionsdüse 1 in den zirkulierenden Gasstrom, der in Leitung 5 durch das Gebläse 2 erzeugt wird. Beim Austritt des Flottenansatzes aus der Injektionsdüse (1) zestäubt die Behandlungsflüssigkeit und wird von dem als Träger bzw. Überträger fungierenden gasförmigen Behandlungsmedium aufgenommen.

Die Verteilung der zerstäubten Flüssigkeit im Behandlungsgut 12 tritt überwiegend im Bereich der Düse 9 ein. Die dadurch in der Wase angestrebte Koaleszenz der Flüssigkeitstropfen wird im Falle des strangförmig geführten Materials von der Warenbewegung und der dabei auftretenden Walkarbeit andauernd unterstützt.

Ab einer bestimmten Flottenaufnahme kann ein Abtropfen der Flüssigkeit von Behandlungsgut nicht vermieden werden, zumal auch die im Speicher befindlichen Stranglagen einen Gewichtsdruck ausüben, der gewissermaßen zum Abpressen der Flüssigkeit führt. Dieser Anteil von überschüssiger, nicht durch die Ware 12 gebundener Flotte steht somit als Flottenvorlage für weitere Zyklen zur Verfügung.

Damit eine Baderschöpfung auch dieses Flüssigkeitsanteils erreicht werden kann, wird derselbe nach dem Aufbringen des gesamten Flottenansatzes auf den umlaufenden Warenstrang von der Injektionspumpe 4 angesaugt und zwecks Rezirkulation erneut über die Düse 1 in zerstäubter Form in den in Leitung 5 umgewälzten, nicht inerten Gasstrom gefördert. Dieser Flüssigkeitsumlauf und Zerstäubungsvorgang wird sodann bis zur Erschöpfung des Bades beibehalten. Hierdurch erreicht man, daß die Flottenbeladung des Textilgutes 12 für die Verteilung und Fixierung des Farbstoffes gleichmäßig gehalten wird. Aufgrund der geschilderten Flottenführung wird es ferner möglich, je nach Verfahrensweise verschiedene Produkte in zeitlichem Abstand nacheinander z.B. einem Färbesystem zuzudosieren, ohne daß die Egalität des so applizierten Behandlungsmittels beeinträchtigt wird. Eine andere Möglichkeit zur Prozeßführung besteht in dieser Hinsicht darin, daß die überschüssige Flotte über Leitung 6 und Pumpe 13 wieder der Jet-Düse 9 zugeleitet wird. Die Positionen 13, 6 und 11 dienen zum Betrieb der Jetanlage unter herkömmlichen Bedingungen (reiner Flüssigkeitsantrieb).

Da der Gasstrom, z.B. Dampf, Träger der zerstäubten Flotte ist, müssen die Zustandswerte Druck und Gastemperatur sowie die Temperatur der zerstäubten Flotte geregelt werden. Durch den Kontakt des aufgrund der Verdichtung im Gebläse 2 überhitzten Dampfes mit der zerstäubten Flotte reduziert sich die Dampftemperatur infolge teilweiser Verdunstung von Flüssigkeit an der Tropfenoberfläche. Die stetige Aufheizung des umgewälzten Systems Gas / Flotte auf die Fixiertemperatur des Farbstoffes ist eine Funktion aus der Verdichtung im Gebläse 2, der Temperatur der injizierten Flotte und des Dampfdruckes. Für die Fixiertemperatur wird die Verdichtungsarbeit, die Temperatur der Flotte und der Dampfdruck in vorgegebenen Werten konstant gehalten.

Aufgrund der intensiven Berührung des in der Düse 9 auf die Ware 12 auftreffenden Gasstromes wird eine schnelle Aufheizung des Behandlungsgutes auch bei anfänglich darin noch evtl. vorhandenen Lufteinschlüssen erreicht. Die maximale Dauer für einen Temperaturanstieg von 80 bis 135°C beträgt ca. 7,5 Min. In der Ware selbst ist während der Aufheizung durch den Gasstrom die Temperaturdifferenz wesentlich geringer als bei einer Aufheizung über die Flotte, da die Temperaturdifferenz der Flotte von dem Aufheizgradienten und dem Badwechsel/Min. abhängig ist.

Eine gewünschte Abkühlung des zirkulierenden Behandlungsmediums erfolgt durch Kühlung der injizierten Flotte und/oder durch Reduzierung des Dampfdruckes innerhalb der Anlage. Bei einer Abkühlung auf Werte

unterhalb 100°C wird der für den Warentransport erforderliche Druck des Gebläses 2 durch Zufuhr von erwärmter Luft bewirkt. Somit können Nachbehandlungen ebenso im Gasstrom erfolgen, wobei sich auch das anschließende Spülen im Feuchtluftstrom durchführen läßt. Zur Erhöhung der injizierten Spülwassermenge wird gegebenenfalls eine zweite Injektionsdüse, die für einen größeren Mengenbereich ausgelegt ist, zugeschaltet. Außerdem besteht die Möglichkeit zur Wasserauffüllung direkt in den Speicherraum von A, wobei der Konzentrationsausgleich über den im Strang 12 mitgeführten Wasseranteil beschleunigt wird.

Bei Verwendung von Dampf als Treibgas im Zuge der beschriebenen Verfahrenstechnik läßt sich vorteilhaft schon eine gleichmäßige Benetzung und Entlüftung des Textilgutes 12 erzielen, bevor das Behandlungsmittel der Ware zugeführt wird, wobei das im Dampfstrom verteilte Behandlungsmittel mit hoher Geschwindigkeit, d.h. hoher Durchdringungskraft, bei der Expansion des Dampfstrahles auf die Ware trifft.

Die mit Hilfe eines Gasstromes erreichbare Warengeschwindigkeit ist höher als im Falle der Schubwirkung durch eine Flottenströmung, da die hieraus resultierende Relativgeschwindigkeit zwischen Ware und Gas erheblich größer ist als die, welche sich zwischen Ware und Flotte ergibt. Durch den sehr geringen Luftanteil im System entfällt der bei herkömmlichen Verfahren auf teilgefluteten Düsenfärbeanlagen notwendige Entschäumerzusatz. Des weiteren tritt bei der Produktbehandlung über den Gasstrom eine wesentlich bessere Öffnung des Stranges ein, was im Vergleich zum Antrieb des Stranges durch Flottenbewegung gemäß der bekannten Arbeitsweise zur Vermeidung von Lauffalten beiträgt.

Vorteilhafte Ergebnisse erbringt die neue Behandlungstechnik auch bei Prozessen, die lediglich für die Warenvorbereitung oder die Nachbehandlung in Betracht kommen, d.h. Behandlungsschritte, welche unter dem Begriff 'Waschen' bekannt oder der Schrumpfauslösung dienlich sind. Die beanspruchte Arbeitsweise kann gleichfalls bei Alkalisierungsprozessen von Textilgut aus Polyesterfasern bzw. -fäden angewendet werden.

Das sich einstellende Flottenverhältnis bei der erfindungsgemäßen Naßbehandlung ist abhängig von der Flottenaufnahme des Textilgutes und der für die betreffende Behandlungsstufe jeweils vorgesehenen Flottenansatzmenge.

Das erreichbare Flottenverhältnis soll an einem Zahlenbeispiel nachstehend erläutert werden:

Wird für eine Polyester (PES)-Maschenware ein spezifisches Gewicht von 0,4 g/cm$^3$ angenommen, so ergibt sich bei 100 kg Einsatzgewicht pro Warenspeicher folgende maximale Flottenaufnahme:

Gesamtvolumen der PES-Maschenware = 100.000/0,4 = 250,00 Liter
durch PES verdrängtes Luftvolumen = 100 / 1,38 = 72,46 Liter
theoretisch freier Raum entspricht
der maximalen Flottenaufnahme = 250 - 72,46 = 177,54 Liter

Bei 100%iger Flottenaufnahme liegt somit ein Flottenverhältnis von 1 : 1,78 vor. Wird ein Anteil für die überschüssige Flotte von 50 Liter angenommen, dann beträgt das Gesamtflottenverhältnis 1 : 2,28. Hierdurch ergibt sich eine erhebliche Ersparnis an Wärmeenergie und Bedarf an Chemikalien und Textilhilfsmitteln.

Was die Realisierbarkeit der vorliegenden Erfindung anbetrifft, so ist es bisher für nicht möglich gehalten worden und zwar daher überraschend, daß aufgrund der besonderen verfahrenstypischen Maßnahmen sich bei einer isothermen Prozeßführung eine egale, gleichmäßige Fixierung der Behandlungsmittel erzielen läßt. Gegen einen solchen Befund sprachen vor allem praktische Erfahrungen und theoretische Überlegungen, wonach unter isothermen Bedingungen, bei denen sich Behandlungsmittel und Behandlungsgut in optimalen Aufnahme- und Fixierzuständen füreinander befinden, jede ungleichmäßige Verteilung beim Aufziehen sofort fixiert und z.B. beim Färben als Unegalität sichtbar wird. Auch aus anderen Referenzen ist dieses Verhalten bekannt: So weisen z.B. die beiden im Stand der Technik genannten gemäß den US-PSen infolge ihrer Zweistufigkeit (Applikationsphase + getrennt davon Fixierphase) auf diese Bedenken hin. Nach alledem außerdem mußte der Fachmann daher ein schwerwiegendes Vorurteil überwinden, um die neue Verfahrenstechnik in Erwägung zu ziehen und zu erproben.

Das erfindungsgemäße Verfahren läuft im allgemeinen nach folgendem Prinzip ab:

Die Jetanlage A wird mit dem Behandlungsgut 12 beschickt (dabei kann auch bereits das Einziehen der Ware in den Jet mittels des nicht inerten Gasstromes erfolgen), worauf man dieses durch den Kontakt mit dem nicht inerten Gasstrom, der über die Zuleitung 15 eingespeist sowie über das Düsensystem 9 in die eigentliche Behandlungszone gedrückt wird, in Bewegung - im allgemeinen in Umlauf-versetzt. Der nicht inerte Gasstrom ist hierbei in der Regel Dampf von bestimmter Temperatur. Dadurch gelingt es, das Behandlungsgut zugleich a) zu erwärmen sowie b) durchgehend und intensiv zu benetzen. Schon nach kurzer Zeit - die Erwärmung und Benetzung verläuft je nach Behandlungsgut in 7 bis 10 Minuten - ist das Optimum der Warenvorbereitung und die vorgegebene Behandlungstemperatur erreicht.

Inzwischen hat man separat davon die Behandlungsmittel in der Regel in eine wäßrige Zubereitungsform gebracht und ebenfalls auf Behandlungstemperatur erhitzt.

Man beginnt nun mit dem Zudosieren dieser flüssigen Zubereitung zunächst in den in Leitung 5 zirkulierenden, nicht inerten Gasstrom über die Injektionsdüse 1 und sodann zusammen mit dem gasförmigen Träger über das Düsensystem 9 in die Bahn (Einwirkungszone) des im Kreislauf befindlichen Warenstranges 12 am besten so, daß während der Zudosierphase mehrere Zyklen des Behandlungsgutes erfolgen. Nach Beendigung des Injektionsvorganges wird der textile Strang 12 noch eine bestimmte Zeit wieterbehandelt, d.h. man hält den Umlauf desselben unter dem Einfluß des strömenden, nicht inerten Gases vorerst noch weiter aufrecht. Dabei wird evtl. aus dem Behandlungsgut ablaufende Behandlungsflotte unter den Gleitstäben (nicht abgebildet) der Jetanlage A gesammelt und über Leitung 14 Injektionspumpe 4 sowie Düse 1 wieder dem Gasstrom in Leitung 5 zugeführt. Durch dieses Recycling wird eine völlige Ausnutzung auch dieser Flottenteile besorgt. Insgesamt sind z.B. beim Färben von PES-Geweben für die Injektionsperiode der Flotte 5 bis 10 Minuten und die nachfolgende Laufzeit je nach Farbtiefe weitere 10 bis 30 Minuten zu rechnen, so daß eine reine Färbedauer von ca. 40 Minuten veranschlagt werden kann. Aufgrund der Tatsache, daß außerdem nur kurze Flottenverhältnisse gegeben sind, ist die Ersparnis an Zeit und Energie durch die erfindungsgemäßen Maßnahmen beträchtlich.

Das neue Verfahren birgt außerdem viele Variationsmöglichkeiten in sich: So kann z.B. durch Ändern der Zusammensetzung des antriebenden, nicht inerten Gasstromes in einem Veredlungsprozeß von einer isothermen Stufe in eine andere isotherme Stufe übergegangen werden.

Ferner kann zwischen dem Antrieb mit nicht inertem Gas oder Flüssigkeit je nach den Bedürfnissen gewechselt werden. Die Jetanlage kann stufenlos geflutet oder teilgeflutet werden, was z.B. Spül- und Waschvorgänge im Anschluß oder zur Vorbereitung anderer Veredlungsprozesse notwendig sein kann.

Es ist auch möglich, isotherme mit nicht isothermen Behandlungsstufen zu verbinden, solche in beliebiger Reihenfolge aufeinander folgen zu lassen, wobei ein stufenloser Übergang ebenso möglich ist wie ein abrupter.

Die nachfolgenden Beispiele dienen zur näheren Erläuterung der Erfindung; für die Verfahrensmaßnahmen entsprechend den Ausführungsbeispielen wurde ein Färbejet des durch die Figur wiedergegebenen Typs eingesetzt:

**Beispiel 1**

In einer Düsenfärbeanlage läßt man 100 kg trockene Strickware aus texturiertem Polyesterfädenmaterial in Strangsform einlaufen, wobei der Warentransport mittels eines Heißluftstromes aus dem Düsensystem (erzeugt durch ein Gebläse) sowie mechanischer Unterstützung durch eine angetriebene Walze erfolgt.

Nach Beendigung des Beschickungsvorganges wird das Textilmaterial derartig zusammengenäht, daß ein endloser Warenstrang entsteht. Man verschließt sodann die Eingangsöffnung des Färbejets und versetzt unter Verwendung von weiterem Heißluftstrom (Bedingungen wie oben) das Textilgut erneut in Umlauf. Danach wird Dampf auf der Druckseite des laufenden Gebläses zugeführt und über die Düsensektion in die Färbeanlage geleitet. Das hierbei im unteren Teil des Färbebehälters anfallende Kondensat wird bei gleichzeitiger Entlüftung der Anlage zur weiteren Verwendung aufgefangen. Durch die Einwirkung des Dampfes erhöht sich nunmehr die Warentemperatur des umlaufenden Textilmaterials auf etwa die des eingedrückten Dampfes, und der Färbebehälter selbst füllt sich mit Dampf von gleicher Temperatur. Bei Erreichen der Endtemperatur von 130°C wird die Dampfzufuhr unter Beibehaltung der Dampfumwälzung abgeschaltet.

Nach dieser Behandlung zum Aufheizen des Textilgutes läßt man aus einem Ansatzgefäß 150 l einer wäßrigen, 85°C heißen Behandlungsflotte, welche - bezogen auf die vorgesehene Gesamtflottenmenge des Färbebades

2 g/l eines Egalisierhilfsmittels auf Basis eineshochmolekularen, sulfogruppenhaltigen Polyesters und

1,5 g/l Natriumacetat sowie Essigsäure zur Einstellung des pH-Wertes auf 4,5 enthält, über eine Injektionspumpe dem umgewälzten Dampfstrom zudosieren. Die Injektionsgeschwindigkeit wird hierbei derartig eingestellt, daß sich die Zufuhr des gesamten Flottenansatzes durch Zerstäubung in der Injektionsdüse auf 5 Warenumläufe verteilt. Der überschüssige, nicht durch die Ware gebundene Flottenanteil wird über die Injektionspumpe sowie das Düsensystem weiter in Zirkulation gehalten, wobei ein dieser Pumpe nachgeschalteter Wärmeaustauscher die Temperatur der Flotte auf 130°C einstellt und auf diesem Wert konstant hält.

Nach einer Behandlungszeit von 5 min..werden über die Injektionspumpe 140 1 einer wäßrigen, 85°C heißen Färbeflotte, die - bezogen auf das Gewicht der Ware

0,25 % des Dispersionsfarbstoffes der Formel

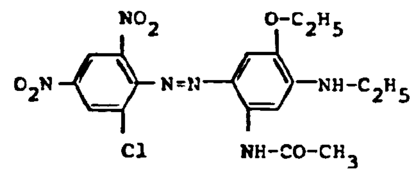

in Form einer wäßrigen Dispersion enthält, dem Dampfstrom zudosiert und in der Düsensektion zerstäubt. Die Injektion dieser Flottenmenge wird auf die Dauer von 10 Warenumläufen verteilt, und die Umwälzung der überschüssigen, nicht absorbierten Gesamtflotte wird bei der vorgewählten Färbetemperatur bis zur Erschöpfung des Färbebades, in diesem Falle 20 min., beibehalten.

Abschließend wird über den Wärmeaustauscher die umlaufende Flotte im Tempo von 1,5°C/min bis auf 85°C abgekühlt, wobei ab einer Temperatur von 110°C der Dampfstrom infolge der Zumischung von Heißluft durch ein daraus resultierendes Dampf/Luftgemisch ersetzt wird. Die für die reduktive Nachbehandlung der so gefärbten Ware üblichen Mengen an Natronlauge, Hydrosulfit und Hilfsmittel, gelöst in 500 l Wasser, werden sodann über die Injektionspumpe in den Kreislauf eingeschleust. Nach etwa 10 min. Laufzeit und Abkühlung auf 60°C wird diese Flotte wieder abgelassen und die Nachbehandlung der Färbung wird durch Spülen mit warmem (50°C) und kaltem Wasser beendet.

Man erhält eine vollkommen egale Blaufärbung auf der Strickware.

**Beispiel 2**

In eine Düsenfärbeanlage läßt man 100 kg trockenes Polyester/Zellwoll-Mischgewebe in Strangform einlaufen, wobei der Warentransport durch einen Dampfstrom aus dem Düsensystem unter Zuhilfenahme eines Gebläses sowie mittels mechanischer Unterstützung durch eine angetriebene Walze erfolgt.

Nach Beendigung des Beschickungsvorganges wird das Fasermaterial derartig zusammengenäht, daß ein endloser Warenstrang entsteht. Man verschließt sodann die Eingangsöffnung der Färbeanlage und versetzt unter erneuter Einschaltung des Gebläses sowie weiterer Dampfzugabe das Textilgut wieder in Umlauf. Durch die Einwirkung des Dampfes erhöht sich die Warentemperatur. Bei Erreichung einer Temperatur von 110°C läßt man nun aus einem Ansatzgefäß 150 1 einer wäßrigen, 85°C heißen Behandlungsflotte, welche - bezogen auf die vorgesehene Gesamtflottenmenge der Färbebades

1,5 g/l eines Hilfsmittels auf Basis eines hochpolymeren,sulfogruppenhaltigen Polyesters und

1,5 g/l Natriumacetat

sowie Essigsäure zur Einstellung des pH-Wertes auf 4,5 enthält, über eine Injektionspumpe dem umgewälzten Dampfstrom zudosieren. Die Injektionsgeschwindigkeit wird hierbei derartig eingestellt, daß sich die Zufuhr dieses Flottenansatzes durch Zerstäubung in der Düsensektion auf 5 Warenumläufe verteilt, und der überschüssige, vom Textilgut nicht aufgenommene Flottenanteil wird während weiterer 5 min. bei 110°C in Umlauf gehalten.

Nach dieser Behandlungszeit werden über die Injektionspumpe 140 1 einer wäßrigen, 80°C heißen Färbeflotte, die - bezogen auf das Gewicht der Ware -

0,4 % des Dispersionsfarbstoffes der Formel

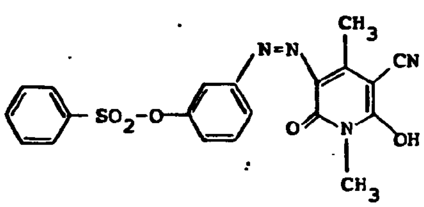

und 0,33 % des Dispersionsfarbstoffes der Formel

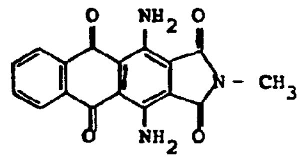

in Form einer wäßrigen Dispersion enthält, dem strömenden Dampf zudosiert. Der zeitliche Ablauf der Flottenzerstäubung wird gleichmäßig über Dauer der durch weitere Dampfzugabe bewirkten Steigerung der Färbetemperatur auf 130°C verteilt. Der überschüssige Anteil an nicht gebundener Gesamtflotte wird sodann bei laufender Zerstäubungweiter in Zirkulation gehalten und der Färbeprozeß wird daraufhin bei 130°C noch etwa 20 mi-n. bis zur Erschöpfung des Färbebades fortgeführt. Nunmehr erfolgt die Abkühlung der zirkulierenden Flotte über einen Wärmeaustauscher bis auf 85°C, wobei sich durch Zumischung von Druckluft ab einer Temperatur von 110°C ein Dampf/Luftgemisch einstellt. Mit der Einleitung von warmem Wasser von etwa 60°C aus dem Ansatzgefäß über die Injektionspumpe wird schließlich der Spülprozeß für die Polyesterfärbung eingeleitet und durch den in dieser Weise bewirkten Badwechsel zusammen mit fallender Temperatur zu Ende geführt.

Für die in der zweiten Phase durchzuführende Färbung des Zellwollanteils des Mischgewebes erfolgt der Warenantrieb über einem erwärmten Luftstrom aus dem Düsensystem mit 0,25 bar Überdruck, erzeugt durch das Gebläse, sowie wiederum mit Unterstützung durch die angetriebene Walze. Hierbei wird gleichzeitig eine Warentemperatur von etwa 40°C eingestellt.

Bei dieser Temperatur werden 150 1 einer im Ansatzgefäß vorbereiteten wäßrigen Vorlaufflotte von ebenfalls etwa 40°C, welche - bezogen auf die vorgesehene Gesamtflottenmenge des Färbebades

15 g/l Soda kalz. und

50 g/l Glaubersalz kalz.

enthält, durch Zerstäuben auf 10 Warenumläufe verteiltsowie durch Rezirkulation des Flottenüberschusses auf das Textilgut gebracht. Anschließend erfolgt während 15 min. unter denselben Bedingungen sowie in analoger Weise der Zusatz einer wäßrigen Reaktivfarbstoff-Lösung in einer Menge von 150 1, die - bezogen auf das Warengewicht -

1,4 % des Reaktivfarbstoffes der Formel

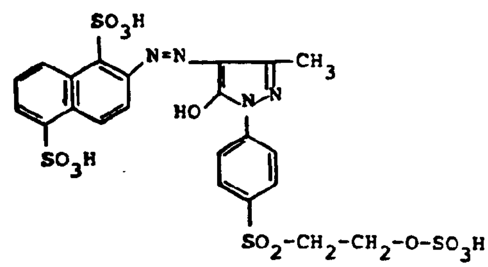

und 08 % des Reaktivfarbstoffes der Formel

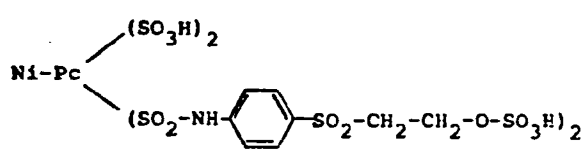

(Ni-Pc = Nickel-Phthalocyanin)

enthält. Durch Zugabe von Dampf in den Heißluftstrom wird jetzt die Färbetemperatur auf 80°C innerhalb von 30 min. erhöht und das umlaufende Textilgut wird 60 min. bei dieser Temperatur belassen. Die Nachbehandlung der Färbung mittels Einleitung Von Spülwasser in die Färbeanlage verbunden mit anschließendem Neutralisations- und Seifbad geschieht entsprechend der üblichen Arbeitsweise.

Man erhält eine egale Grünfärbung auf dem Polyester/Zellwoll-Mischgewebe.

**Beispiel 3**

Zur Erzielung eines sogenannten Seidenfinishes läßt man 70 kg trockene Strickware in Strangform aus Polyesterfasermaterial mit Unterstützung eines Dampfstromes in eine Düsenfärbeanlage einlaufen und versetzt das Textilgut gemäß Vorschrift von Beispiel 2 in Umlauf. Nach Erreichen einer Warentemperatur von 110°C werden 200 1 einer wäßrigen Flotte, welche

20 g/l Ätznatron

enthält, über das Injektionsdüsensystem auf den Warenstrang gebracht und dort während eines Zeitraumes von 20 min. bei andauernder Rezirkulation der überschüssigen Flottenmenge zur Einwirkung gebracht. Anschließend kühlt man das Behandlungsbad bis auf etwa 80°C entsprechend Beispiel 2 ab und führt die Nachbehandlung durch Injektion von Spülflotte in die Zirkulation sowie Neutralisation der Ware - wie üblich - verbunden mit daraus resultierendem Badwechsel bei zugleich fallender Temperatur durch.

Man erhält einen Warenausfall der Polyesterware mit seidenähnlichem Griff.

**Beispiel 4**

In eine Düsenfärbeanlage läßt man 100 kg trockene Maschenware (in Strangform) aus Baumwollfasermaterial einlaufen und gemäß Vorschrift von Beispiel 2 durch Anwendung von strömendem Dampf in Umlauf bringen. Sobald die Warentemperatur 100°C erreicht hat, werden 250 1 einer wäßrigen Flotte von 85°C, welche - bezogen auf das Warengewicht - 2 % des Küpenfarbstoffes Vat Brown 45 mit der C.I.-No. 59 500 in Form einer wäßrigen Dispersion enthält, über das Injektionsdüsensystem auf den umlaufenden Warenstrang verteilt und doit während eines Zeitraumes von 15 min. bei fortdauernder Rezirkulation der überschüssigen Flotte zur Einwirkung gebracht. Daraufhin werden 100 l einer wäßrigen Flotte (85°C), welche

18 $cm^3$/l Natronlauge von 38°Be (= 32,5 %ig) und
8 g/l eines stabilisierten Sulfoxylats als
Reduktionsmittel

enthält, im Verlauf von 10 min. dem umgewälzten Behandlungsmedium zudosiert. Im Anschluß daran wird durch weitere Dampfzugabe auf der Druckseite des Gebläses die Färbetemperatur auf 115°C erhöht und die Ware wird daraufhin noch 40 min. bei dieser Temperatur gefärbt. Über den Wärmeaustauscher kühlt man das Bad sodann bis auf 70°C ab, wobei dem zirkulierenden Dampfstrom ab einer Temperatur von 110°C Stickstoff zugemischt wird. Bei einer Temperatur von etwa 70°C erfolgt nun die Zudosierung einer wäßrigen Lösung von 1,5 g/l Hydrosulfit zur Stabilisierung des Küpenstandes, und man behandelt das Textilgut weitere 10 min. unter diesen Bedingungen. Die Fertigstellung der Färbung wird schließlich, wie bei Küpenfärbungen üblich, durch Spülen, Oxidieren und Seifen ausgeführt.

Man erhält eine egale Braunfärbung auf der Baumwolle.

**Beispiel 5**

Die Färbeoperation wird unter Verwendung von 70 kg gebleichter, schleuderfeuchter Baumwollmaschenware (in Strangform) vorgenommen; zu deren Durchführung verfährt man gemäß Vorschrift von Beispiel 2, d.h. der Warenvortrieb erfolgt auch hier durch den beaufschlagten Dampfstrom. Unter diesen Bedingungen werden dem strömenden Dampf bei einer Temperatur von 60°C 2001 einer separat angesetzten Flotte zudosiert, welche - bezogen auf das Warengewicht

15 % Soda kalz. und
3 % des Farbstoffes Direct Yellow 28 mit der
C.I.-No. 19 555

gelöst in 60°C heißem Wasser enthält. Die Zerstäubungdieser Flotte verteilt sich auf 10 Warenumläufe, und anschließend wird im Verlauf von 20 min. sowie unter andauernder Rezirkulation der vom Textilgut nicht gebundenen Flotte durch Dampfzufuhr die Temperatur des Behandlungsmediums auf 100°C erhöht. Nach Ablauf von weiteren 10 min. läßt man 100 1 einer getrennt vorbereiteten wäßrigen Flotte von 85°C, welche - bezogen auf die vorgesehene Gesamtflottenmenge des Färbebades - 10 % Glaubersalz kalz. enthält, innerhalb von 10 min. dem umlaufenden Fasermaterial zudosieren, das anschließend noch 20 min. weitergefärbt wird. Über einen Wärmeaustauscher kühlt man nun die umgewälzte Flotte ab und stellt die Färbung dann wie in Beispiel 2 durch Injektion von Spülbädern und Nachbehandlungsbädern fertig.

Man erhält eine egale Gelbfärbung auf der Baumwollmaschenware.

**Beispiel 6**

Unter Verwendung von 100 kg Webware (in Strangform aus Polyacrylnitril-Fasern verfährt man zur Erstellung der Färbung wie in Beispiel 2. Hierbei werden dem unter Zuhilfenahme von strömendem Dampf bewegten Textilmaterial bei einer Temperatur von 80° C 150 l einer separat ausgesetzten Flotte zudosiert, welche - bezogen auf das Warengewicht

5 % Glaubersalz kalz.,
0,5 % eines Retarders auf Basis von 50 Gew.-% des Umsetzungsproduktes von 1 Mol Stearylamin mit 3 Mol Ethylenoxid,
2 % Natriumacetat krist. und
1,5 % Essigsäure (60 %ig)

gelöst in Wasser von 80°C enthält. Die Zerstäubung dieserFlotte wird auf 10 Warenumläufe verteilt, und anschließend werden 100 1 einer 80°C heißen, wäßrigen Färbeflotte, welche - bezogen auf das Warengewicht

3 % des basischen Farbstoffs der Formel

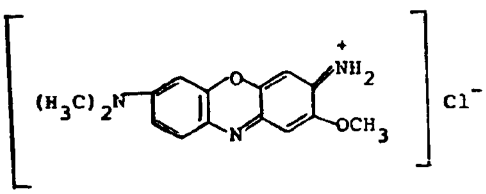

in gelöster Form enthält, während einer Dauer von 10 min. auf.den umlaufenden Warenstrang gebracht. Unter Rezirkulation der überschüssigen Flotte erhöht man nunmehr die Temperatur des Färbebades durch Dampfzufuhr innerhalb von 15 min. auf 103°C, und das Textilgut wird sodann noch 45 min. bis zur.Erschöpfung des Färbebades der Einwirkung des Behandlungsmittels unter diesen Bedingungen ausgesetzt. Die Nachbehandlung der so gefärbten Ware besteht aus Abkühlen der umgewälzten Flotte und Injektion der für Färbungen mit kationischen Farbstoffen üblichen Behandlungsbäder.

Man erhält eine egale Dunkelblaufärbung auf Polyacrylnitril-Webware.

**Beispiel 7**

In eine Düsenfärbeanlage läßt man 120 kg gebleichte Strickware aus Baumwollfasern in Strangform einlaufen, wobei der Warentransport durch einen Warmluftstrom aus dem Düsensystem, welcher über ein Gebläse mit einem Überdruck von 0,25 bar erzeugt wird, erfolgt. Die Warentemperatur des endlos umlaufenden Warenstranges erhöht sich somit durch den Heißluftstrom auf 60°C. Sodann injiziert man 2001 einer wäßrigen Flotte von 50° C, die in gelöster Form - bezogen auf die vorgesehene Gesamtflottenmenge der Färbung (350 1)

0,5 g/l Di-isobutyl-naphthalinsulfonsaures Natrium,
1 g/l Soda kalz.,
1 g/l 2,2′-Dinaphthylmethan-6,6′-disulfonsauresNatrium, und
0,5 g/l des Leukoküpenesterfarbstoffes Solubilised Vat Brown 1 mit der C.I.-No. 70 801

enthält, in das umgewälzte Antriebsmittel und bringt die Farbstoffzubereitung in dieser Form mit dem Textilgut in Kontakt. Nach einer Vorlaufzeit von 10 min. wird auf gleiche Weise ein weiteres Bad, enthaltend

25 g/l Glaubersalz kalz. und
0,5 g/l Natriumnitrit

gelöst in 100 1 Wasser von 50° C, gleichmäßig über den umlaufenden Warenstrang verteilt. Diese Verteilung geschieht innerhalb von 10 min., wobei die überschüssige, vom Fasermaterial nicht absorbierte Flotte rezirkuliert wird. Diesem Schritt folgt eine Abkühlung des Behandlungsmittels mit Hilfe eines Wärmeaustauschers im Verlauf von 30 min. bis auf 70°C Flottentemperatur. Daraufhin werden bei 30°C

5 $cm^3$/l Schwefelsäure (96 %ig)

verdünnt mit 50 1 Wasser, innerhalb von 15 min. durch Zerstäubung gleichmäßig auf die Ware gebracht und diese wird unter diesen Bedingungen noch 10 min. weiter behandelt. Es schließt sich sodann die für Färbungen mit Leukoküpenester-Farbstoffen übliche Nachbehandlung an.

Man erhält eine egale Braunfärbung auf der Baumwollstrickware.

**Patentansprüche**

1. verfahren zur diskontinuierlichen oder kontinuierlichen Naßbehandlung von strangförmigem Textilgut aus synthetischen oder natürlichen Fasern, oder aus Mischungen solcher Fasern, mit für den betreffenden Fasertyp geeigneten Farbstoffen nach der Ausziehmethode oder anderen Textilveredlungsprodukten auf Düsen(Jet)Färbeanlagen, wobei der Warenvorschub über ein Düsensystem mittels eines umgewälzten Gasstroms erfolgt, dem im Bereich der Düsensektion für den Warenantrieb zugleich die Behandlungsmittel oder Behandlungsmittelzubereitungen in zerstäubter Form zugesetzt werden, dadurch gekennzeichnet, daß man ein Antriebsgas verwendet, das bei der angewandten Temperatur in einem verfahrenstechnisch in bezug auf die beabsichtigte spezifische Behandlungswirkung nicht inerten Zustand ist und daß man den Gasstrom mit den zugesetzten Behandlungsmitteln oder Behandlungsmittelzubereitungen mit Fixierbedingungen entsprechenden Temperatur- und Druckbedingungen durch gegebenenfalls mehrfachen Kontakt mit dem Textilgut zur Einwirkung bringt.

2. Verfahren nach Anspruch 1, dadurch gekennzeichnet, daß der Gasstrom ein Dampfstrom ist.

3. Verfahren nach Anspruch 1, dadurch gekennzeichnet, daß der Gasstrom Heißluft ist.

4. Verfahren nach Anspruch 1, dadurch gekennzeichnet, daß der Gasstrom ein anderes heißes Gas als Dampf oder Heißluft ist.

5. Verfahren nach Anspruch 1, dadurch gekennzeichnet, daß der Gasstrom ein Gasgemisch ist.

6. Verfahren nach Ansprüchen 1 und 5, dadurch gekennzeichnet, daß der Gasstrom ein Dampf-Luftgemisch ist.

7.Verfahren nach Anspruch 1, dadurch gekennzeichnet' daß der Gasstrom ein heißer oder kaltere Lösemitteldampf ist.

8. Verfahren nach Anspruch 1, dadurch gekennzeichnet, daß man den Gasstrom aus heißen und kalten Komponenten zur Verfahrenstemperatur mischt.

9. Verfahren nach Ansprüchen 1 bis 8, dadurch gekennzeichnet, daß man das Textilgut unter rein isothermen Bedingungen behandelt.

10. Verfahren nach Ansprüchen 1 bis 8, dadurch gekennzeichnet, daß man das Textilgut in mehreren isothermen Stufen verschiedener Temperatur behandelt.

11. Verfahren nach Ansprüchen 1 bis 8, dadurch gekennzeichnet, daß man isotherme mit nicht isothermen Behandlungsstufen verbindet.

12. Verfahren nach Ansprüchen 1 bis 11, dadurch gekennzeichnet, daß man die Behandlungstemperatur allein über das Gas regelt.

13. Verfahren nach Ansprüchen 1 bis 11, dadurch gekennzeichnet, daß man die Behandlungstemperatur über das Gas und das Behandlungsmittel regelt.

14. Verfahren nach Ansprüchen 1 bis 13, dadurch gekennzeichnet, daß ein im Behandlungskessel kondensierender Überschuß des Behandlungsmittels erneut der Düsensektion zugeführt wird.

**Claims**

1. A process for the discontinuous or continuous wet treatment of a textile material of synthetic or natural fibers or of mixtures of such fibers in the rope form with dyestuffs suitable for the particular fiber type by the exhaust method or with other textile-finishing products on jet dyeing machines, in which the goods are propelled via a jet system by means of a circulated gas stream to which gas stream, at the same time, the treatment agents or treatment agent formulations are added in an atomized form in the range of the jet section for the goods drive, characterized in that a gas for the goods drive is employed, which gas is, in said process, and at the temperature applied, in a non-inert condition with respect to the intended specific treatment effect and that the gas stream together with the treatment agents or treatment agent formulations added is brought into contact, optionally for several times, with the textile goods under pressure and temperature conditions suitable for fixation.

2. The process as claimed in claim 1, wherein the gas stream is a steam stream.

3. The process as claimed in claim 1, wherein the gas stream is hot air.

4. The process as claimed in claim 1, wherein the gas stream is a hot gas other than steam or hot air.

5. The process as claimed in claim 1, wherein the gas stream is a mixture of gases.

6. The process as claimed in claim 1 and 5, wherein the gas stream is a mixture of steam and air.

7. The process as claimed in claim 1, wherein the gas stream is hot or cold solvent vapor.

8. The process as claimed in claim 1, wherein the gas stream is mixed from hot and cold components to give the process temperature.

9. The process as claimed in claims 1 to 8, wherein the textile goods are treated under pure isothermal conditions.

10. The process as claimed in claims 1 to 8, wherein the textile goods are treated in several isothermal stages of different temperature.

11. The process as claimed in claims 1 to 8, wherein isothermal stages are combined with non-isothermal treatment stages.

12. The process as claimed in claims 1 to 11, wherein the treatment temperature is controlled solely via the gas.

13. The process as claimed in claims 1 to 11, wherein the treatment temperature is controlled via the gas and the treatment agent.

14. The process as claimed in claims 1 to 13, wherein excess treatment agent condensing in the treatment vessel is returned to the jet section.

## Revendications

1. Procédé pour le traitement au mouillé, discontinu ou continu, une matière textile en forme de boyau, en des fibres naturelles ou synthétiques ou en des mélanges de telles fibres, avec des colorants convenant pour le type de fibres en cause selon le procédé par épuisement ou avec d'autres produits d'apprêt ou ennoblissement pour textiles dans des installations de teinture comportant des tuyères ("jets"), où l'avance de la marchandise est effectuée par un système de buses à l'aide d'un courant de gaz circulant en circuit fermé, auquel on ajoute, dans la zone de la section des tuyères pour l'avancement de la marchandise, en même temps les agents de traitement ou les préparations d'agents de traitement sous forme pulvérisée, procédé caractérisé en ce qu'on utilise un gaz d'entraînement qui, à la température appliquée, est dans un état techniquement non inerte en ce qui concerne l'action de traitement spécifique voulue, et en ce qu'on fait agir le courant gazeux avec les agents de traitement ou les préparations d'agents de traitement ajoutés, dans des conditions de température et de pression correspondant à des conditions de fixage, par un contact, éventuellement multiple, avec la matière textile.

2. Procédé selon la revendication 1, caractérisé en ce que le courant gazeux est un courant de vapeur d'eau.

3. Procédé selon la revendication 1, caractérisé en ce que le courant gazeux est un courant d'air chaud.

4. Procédé selon la revendication 1, caractérisé en ce que le courant gazeux est un gaz chaud autre que la vapeur d'eau ou de l'air chaud.

5. Procédé selon la revendication 1, caractérisé en ce que le courant gazeux est un mélange de gaz.

6. Procédé selon les revendications 1 et 5, caractérisé en ce que le courant gazeux est un mélange vapeur d'eau/air.

7. Procédé selon la revendication 1, caractérisé en ce que le courant gazeux est de la vapeur de solvant chaude ou froide.

8. Procédé selon la revendication 1, caractérisé en ce qu'on mélange le courant gazeux, formé de composants chauds et froids, pour obtenir la température nécessaire au procédé.

9. Procédé selon les revendications 1 à 8, caractérisé en ce qu'on traite la matière textile dans des conditions purement isothermes.

10. Procédé selon les revendications 1 à 8, caractérisé en ce qu'on traite la matière textile en plusieurs étapes isothermes à une température différente.

11. Procédé selon les revendications 1 à 8, caractérisé en ce qu'on lie des étapes de traitement isotherme avec des étapes de traitement non isotherme.

12. Procédé selon les revendications 1 à 11, caractérisé en ce qu'on règle la température de traitement uniquement à l'aide du gaz.

13. Procédé selon les revendications 1 à 11, caractérisé en ce qu'on règle la température de traitement à l'aide du gaz et de l'agent de traitement.

14. Procédé selon les revendications 1 à 13, caractérisé en ce qu'on achemine à nouveau à la section des buses un excès de l'agent de traitement condensé dans le récipient du traitement.

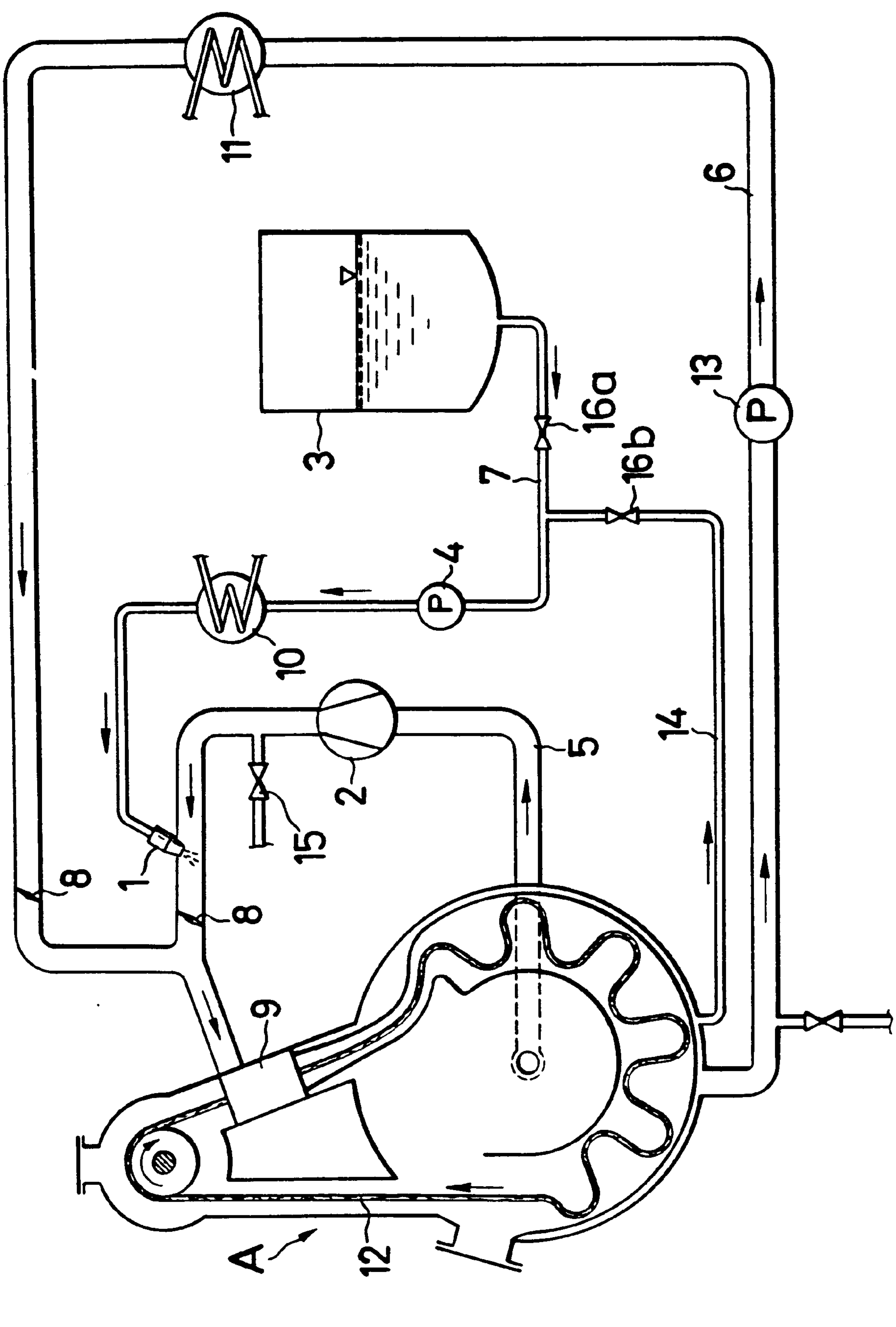
11
6
3
16a
13
P
16b
7
4
P
10
2
5
14
15
1
8
8
9
12
A